# EUROPÄISCHE PATENTSCHRIFT

(11) **EP 2 784 223 B1**
(45) Veröffentlichungstag und Bekanntmachung des Hinweises auf die Patenterteilung: **15.07.2020**
(21) Anmeldenummer: 14152218.5
(22) Anmeldetag: 23.01.2014
(51) Int. Cl.: E02F 3/36, B62D 49/00, E02F 9/22, F04B 35/00, A01B 71/06, F15B 11/00, A01B 59/00

(54) **Fahrzeug mit Anbaugerätekupplung**
Vehicle with attachment coupling
Véhicule doté d'un accouplement d'accessoire

(30) Priorität: 27.03.2013 DE 102013005213
(43) Veröffentlichungstag der Anmeldung: 01.10.2014
(73) Patentinhaber: CLAAS Industrietechnik GmbH, 33106 Paderborn (DE)
(72) Erfinder: Fedde, Thomas, Dr., 33129 Delbrück (DE)
(74) Vertreter: CLAAS Gruppe

(56) Entgegenhaltungen:
- EP-A1- 2 466 018
- EP-A2- 2 426 270
- WO-A2-2013/020856
- DE-A1-102007 048 697
- DE-U1-202004 015 662
- JP-A- 2013 007 186
- US-A- 6 116 006
- US-A1- 2010 092 233

## Beschreibung

Die vorliegende Erfindung betrifft ein Fahrzeug, insbesondere ein landwirtschaftliches Fahrzeug wie etwa einen Traktor, mit einer Kupplung für die Montage eines Anbaugeräts sowie ein zum Gebrauch an dieser Kupplung geeignetes Anbaugerät.

Zahlreiche Anbaugeräte zur Verwendung an Traktoren haben bewegliche Teile, zu deren Antrieb eine Antriebsenergiequelle erforderlich ist. In der Regel wird die für ein solches Anbaugerät benötigte Antriebsenergie von einem Motor des Traktors abgegriffen, z.B. durch eine Zapfwelle oder durch Hydraulikfluid, das, von einer Pumpe an Bord des Traktors angetrieben, in Hoch- und Niederdruckleitungen des Traktors und des Anbaugeräts zirkuliert. Diese Leitungen müssen jedes Mal voneinander getrennt und neu zusammengefügt werden, wenn das Anbaugerät am Traktor ausgetauscht wird.

Unter der Bezeichnung "Power-Beyond" sind Hydrauliksysteme für Traktoren bekannt geworden, bei denen der Durchsatz der Pumpe selbsttätig anhand des Bedarfs der angeschlossenen Verbraucher gesteuert ist. Die Pumpe eines solchen Systems läuft mit dem Motor des Traktors ständig mit, um einen hohen Druck der Hochdruckleitung ständig aufrechterhalten, sogar dann, wenn kein Verbraucher Hydraulikfluid aus der Hochdruckleitung abnimmt. Den hohen Druck aufrechtzuerhalten ist notwendig, damit, wenn ein Verbraucher beginnt, Hydraulikfluid abzunehmen, der Druck auf der Hochdruckleitung abnehmen und eine Nachführung der Fördermenge der Pumpe bewirken kann. Die Notwendigkeit, ständig die Pumpe mit dem Motor mitlaufen zu lassen, bringt auch Nachteile mit sich. Da der hohe Druck ständig bis ins Anbaugerät hinein anliegt, auch wenn das Anbaugerät, z.B. während einer Straßenfahrt des Traktors, nicht in Betrieb ist, kann an einer undichten Stelle ständig Hydraulikfluid verloren gehen. Die Verwendung von selbstschließenden Absperrventilen (auch als Schnellverschlusskupplungen bezeichnet) an miteinander zu verbindenden Hoch- und Niederdruckanschlüssen des Fahrzeugs und des Anbaugeräts wie aus der WO2013/020856 bekannt erlaubt es zwar, die Anschlüsse bei laufendem Motor voneinander zu trennen, ohne dass dies zum Auslaufen von Hydraulikfluid führt, doch muss, um sie wieder zusammenzufügen, das Absperrventil des fahrzeugseitigen Hochdruckanschlusses entgegen dem daran anliegenden Druck geöffnet werden. Dafür reicht, insbesondere bei großen Leitungsquerschnitten, die Körperkraft eines Anwenders oft nicht aus. Außerdem besteht eine erhebliche Gefahr, dass wenn das Absperrventil öffnet, die Leitungen des Traktors und des Anbaugeräts aber noch nicht fest miteinander verbunden sind, heißes Hydraulikfluid austritt und den Anwender verletzt. Wenn der Anwender eines Traktors mit Power-Beyond-Hydrauliksystem ein über dieses Hydrauliksystem angetriebenes Anbaugerät gegen ein anderes austauschen möchte, bleibt ihm daher im Allgemeinen nichts anderes übrig, als den Motor auszuschalten. Insbesondere bei modernen Fahrzeugen mit aufwendiger Elektronikausstattung führt das mit einem Neustart des Motors verbundene Hochfahren der Elektronik zu lästigen Arbeitszeitverlusten.

Aufgabe der vorliegenden Erfindung ist, ein Fahrzeug zu schaffen, an das ein hydraulisch angetriebenes Anbaugerät ankoppelbar ist und das einen problemlosen Austausch des Anbaugeräts auch bei laufendem Motor des Fahrzeugs erlaubt.

Die Aufgabe wird durch die technischen Merkmale des Anspruchs 1 gelöst.

Indem das Abschaltventil in seine sperrende Stellung versetzt wird, kann der Hochdruckanschluss von der Pumpe abgekoppelt werden, so dass ein Abschnitt des Hochdruckleitungsbereichs zwischen dem Abschaltventil und dem Hochdruckanschluss spätestens in dem Moment drucklos wird, in dem ein Anbaugerät von dem Hochdruckanschluss abgekoppelt wird. Die Drucklosigkeit des Hochdruckanschlusses ermöglicht das Ankoppeln eines komplementären Hochdruckanschlusses des Anbaugeräts ohne übermäßigen Kraftaufwand. Das Ankoppeln ist daher schnell und problemlos möglich, und auch wenn während des Ankoppelns die Hochdruckanschlüsse von Fahrzeug und Anbaugerät zeitweilig nicht dicht verbunden sind, ist ein unkontrollierter Austritt von Hydraulikfluid zwischen den Anschlüssen ausgeschlossen.

Vorzugsweise ist das Abschaltventil ein Wegeventil, das in seiner den Fluss von Hydraulikfluid zum Hochdruckanschluss sperrenden Stellung den Hochdruckanschluss mit dem Niederdruckleitungsbereich verbindet. Auf diese Weise ist die Drucklosigkeit des Hochdruckanschlusses unmittelbar durch Schalten des Abschaltventils in die sperrende Stellung gewährleistet, so dass bereits bevor der Anwender die Hochdruckanschlüsse voneinander trennt, kein Überdruck mehr vorhanden ist, der zu einem unkontrollierten Verspritzen von Hydraulikfluid führen könnte.

Um eine hohe Dichtigkeit des Abschaltventils in der sperrenden Stellung zu gewährleisten, ist das Abschaltventil vorzugweise als Sitzventil ausgeführt. Dies ermöglicht es, den hohen Ausgangsdruck der Pumpe zu nutzen, um einen Schließkörper des Abschaltventils gegen den Ventilsitz zu drücken.

Das Fahrzeug kann eine Steuereinheit aufweisen, die eingerichtet ist, das Angeschlossensein des Anbaugeräts an Hoch- und Niederdruckanschluss zu erfassen und das Abschaltventil in der sperrenden Stellung zu halten, wenn an wenigstens einem der Anschlüsse das Angeschlossensein des Anbaugeräts nicht erfasst wird, und daher die Gefahr einer Undichtigkeit besteht.

Nach der Erfindung ist ein Steuereingang des Abschaltventils direkt oder indirekt mit einem Steueranschluss verbunden ist, an den das Anbaugerät anschließbar. Dadurch kann die Stellung des Absperrventils auch in Abhängigkeit vom Betriebszustand des Anbaugeräts zweckmäßig gesteuert werden. Nach der Erfindung ist das Abschaltventil in der sperrenden Stellung gehalten, wenn das Anbaugerät nicht an dem Steueranschluss angeschlossen ist.

Vorzugweise sind der Steuereingang des Abschaltventils und der Steueranschluss des Fahrzeugs über eine elektrische Signalleitung verbunden. Eine solche elektrische Signalleitung erleichtert insbesondere das Zusammenführen von Steuersignalen für das Abschaltventil aus mehreren Quellen, solchen des Anbaugeräts und/oder solchen des Fahrzeugs.

Die elektrische Signalleitung kann insbesondere als ein Datenbus ausgebildet sein.

Vorzugsweise ist das Abschaltventil durch ein auf der Signalleitung empfangenes Signal jeweils für begrenzte Zeit in eine offene Stellung versetzbar. Wenn im Falle einer Störung wie etwa einer aufgerissenen Verbindung zwischen Fahrzeug und Anbaugerät, keine Signale des Anbaugeräts mehr am Abschaltventil eintreffen, ist auf diese Weise sichergestellt, dass nach der begrenzten Zeit das gestörte Anbaugerät nicht mehr mit Hydraulikfluid versorgt wird. Infolgedessen kann Hydraulikfluid auch nicht vom Fahrer unbemerkt in größerer Menge über ein Leck des Anbaugeräts oder der Verbindung zwischen Anbaugerät und Fahrzeug verloren gehen.

Weitere Merkmale und Vorteile der Erfindung ergeben sich aus der nachfolgenden Beschreibung von Ausführungsbeispielen unter Bezugnahme auf die beigefügten Figuren.
- Fig. 1: ist eine schematische Darstellung der Hydrauliksysteme eines Traktors und eines am Traktor montierten Anbaugeräts gemäß einer ersten Ausgestaltung der vorliegenden Erfindung; und
- Fig. 2: ein Detail der Hydrauliksysteme eines Traktors und eines Anbaugeräts gemäß einer zweiten Ausgestaltung.

Das Hydrauliksystem auf Seiten des Traktors ist eine Weiterbildung des an sich bekannten Power-Beyond-Systems. Es umfasst eine Verstellpumpe 1, die an einen in der Figur nicht dargestellten Dieselmotor fest gekoppelt ist und rotiert, solange der Dieselmotor in Betrieb ist. Ein Sauganschluss der Verstellpumpe 1 ist mit einem Tank 2 für Hydraulikfluid verbunden; ein Druckanschluss mündet auf eine Hochdruckleitung 3. Die Schluckmenge der Verstellpumpe 1 ist durch einen Stellzylinder 4 gesteuert. Eine Lastabhängigkeit der Steuerung wird erreicht durch ein als Regeldruckwaage 5 arbeitendes Wegeventil, das den Stellzylinder 4 entweder mit dem Tank 2 oder der Hochdruckleitung 3 verbindet. Die Stellung der Regeldruckwaage 5 ist bestimmt durch einander entgegenwirkende Drücke der Hochdruckleitung 3 und einer Lastdruck-Meldeleitung 6. Der Druck auf der Lastdruck-Meldeleitung 6 kann nicht höher sein als der auf der Hochdruckleitung 3. Solange die Differenz zwischen beiden Drücken unter einem vorgegebenen Grenzwert liegt, nimmt die Regeldruckwaage 5 die in der Figur gezeigte Stellung ein, in der Hydraulikfluid aus dem Stellzylinder 4 zum Tank 2 abfließt und infolgedessen die Schluckmenge der Verstellpumpe 1 zunimmt. Wenn ein daraus resultierender Druckanstieg auf der Hochdruckleitung 3 die Regeldruckwaage 5 zum Schalten bringt, wird der Stellzylinder 4 mit der Hochdruckleitung 3 verbunden, Hydraulikfluid strömt in ihn ein, und die Schluckmenge der Verstellpumpe 1 wird reduziert. Durch wiederholtes Umschalten zwischen den Stellungen der Regeldruckwaage 5 stellt sich ein Gleichgewichtsdruck auf der Hochdruckleitung 3 ein.

Zwischen die Regeldruckwaage 5 und den Stellzylinder 4 kann, wie in der Figur gezeigt, ein Sicherungsventil 7 eingefügt sein, das allein durch den Druck aus der Hochdruckleitung 3 gesteuert ist. Das Sicherungsventil 7 ist unter normalen Betriebsbedingungen immer in der in der Figur gezeigten, Stellzylinder 4 und Regeldruckwaage 5 verbindenden Stellung. Nur bei Überschreiten eines höchsten zulässigen Drucks auf der Hochdruckleitung 3 stellt es eine Verbindung zwischen Hochdruckleitung 3 und Stellzylinder 4 her, die den Stellzylinder 4 zum Ausfahren und Reduzieren der Schluckmenge der Verstellpumpe 1 bringt.

Die Hochdruckleitung 3 versorgt nicht dargestellte Verbraucher des Traktors über Wegeventile 8a, 8b. Die Figur zeigt zwei solche Wegeventile, in der Praxis kann ihre Zahl je nach Anzahl der zu versorgenden Verbraucher variieren. Die Wegeventile 8a, 8b sind hier jeweils in einer Sperrstellung gezeigt, in der den Verbraucher sowohl von der Hochdruckleitung 3 als auch von einer zum Tank 2 führenden Niederdruckleitung 9 getrennt halten. Ein Abschnitt 6a bzw. 6b der Lastdruck-Meldeleitung ist in der Sperrstellung des Wegeventils 8a bzw. 8b mit der Niederdruckleitung 9 verbunden. Aus der Sperrstellung sind die Wegeventile 8a, 8b in zwei Offenstellungen umschaltbar, in denen sie jeweils den ihnen zugeordneten Verbraucher mit Hoch- und Niederdruckleitungen 3, 9 und die Lastdruck-Meldeleitung 6 mit der Hochdruckleitung 3 verbinden.

Die Hochdruckleitung 3 des Fahrzeugs endet an einem fahrzeugseitigen Hochdruckanschluss 10 am Heck des Traktors. Mit diesem Hochdruckanschluss 10 ist ein komplementärer Hochdruckanschluss 11 einer auf Seiten des Anbaugeräts verlaufenden Hochdruckleitung 12 lösbar verbunden. Entsprechend erstrecken sich die Niederdruckleitung 9 und die Lastdruck-Meldeleitung 6 auf Seiten des Fahrzeugs bis zu einem Niederdruckanschluss 13 bzw. einem Lastdruckanschluss 14, mit denen jeweils komplementäre Anschlüsse 15, 16 des Anbaugeräts lösbar verbunden sind.

Hochdruck- Niederdruck- und Lastdruck-Meldeleitungen 18, 19, 20 verlängern auf Seiten des Anbaugeräts die entsprechenden Leitungen des Fahrzeugs. Im Anbaugerät ist ein einzelnes Wegeventil 21 dargestellt, das mit den Leitungen 18, 19, 20 verbunden ist, um einen nicht dargestellten Verbraucher des Anbaugeräts zu versorgen. Wie auf Seiten des Traktors dargestellt, können auch auf Seiten des Anbaugeräts mehrere Wegeventile parallel an Hoch- und Niederdruckleitungen 18, 19 angeschlossen sein, um mehrere Verbraucher zu versorgen.

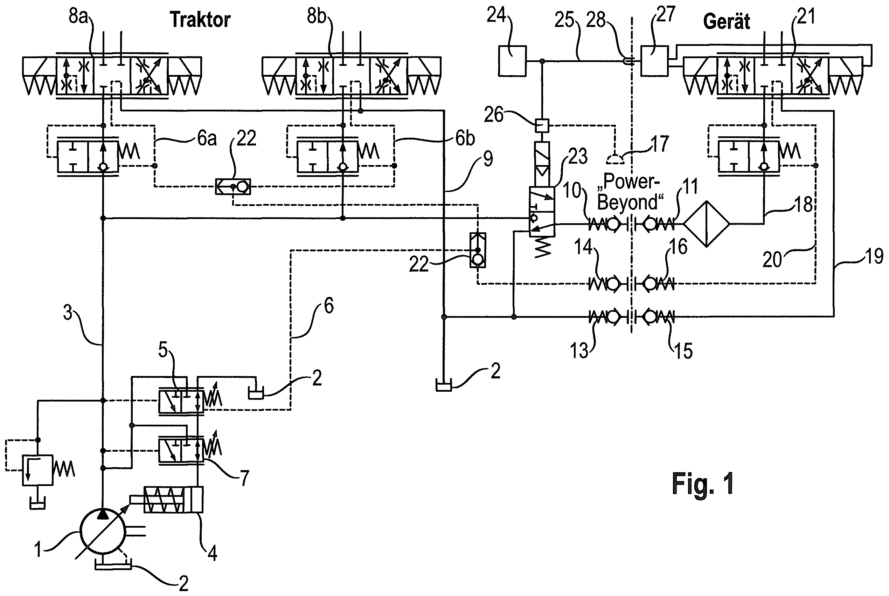

Die Lastdruck-Meldeleitungen 6, 20 bilden eine baumartige Struktur, die, ausgehend vom Steueranschluss der Regeldruckwaage 5 sich verzweigend bis zu jedem einzelnen Wegeventil 8, 8a, 21 erstreckt. An jeder Verzweigung der Lastdruck-Meldeleitung 6 ist ein Wechselventil 22 angeordnet. Die Wechselventile 22 sind jeweils so montiert, dass sie einen von einem der Wegeventile 8a, 8b, 21 ausgehenden hohen Druck baumabwärts zur Regeldruckwaage 5 durchlassen, nicht aber zu einem der anderen Wegeventile. Die Lastdruck-Meldeleitung 6 beaufschlagt daher die Regeldruckwaage 5 immer dann mit hohem Druck, wenn wenigstens eines der Wegeventile 8a, 8b, 21 in einer Durchlassstellung ist; lediglich wenn alle Wegeventile 8a, 8b, 21, wie in Fig. 1 gezeigt, in Sperrstellung sind, ist der Druck auf der Lastdruck-Meldeleitung 6 niedrig.

In die fahrzeugseitige Hochdruckleitung 12 ist kurz vor dem Hochdruckanschluss 10 ein Abschaltventil 23 eingefügt. In der in der Figur dargestellten Stellung verbindet das Abschaltventil 23 den Hochdruckanschluss 10 mit der Niederdruckleitung 9. Das Abschaltventil 23 ist als Sitzventil ausgeführt, d.h. die Druckdifferenz zwischen einem der Pumpe 1 zugewandten Einlass des Abschaltventils 23 und seinem dem Hochdruckanschluss 10 zugewandten Auslass hält einen Dichtkörper des Ventils 23 an einen Ventilsitz angepresst. In der gezeigten Stellung des Abschaltventils 23 ist auf Seiten des Anbaugeräts die Hochdruckleitung 18 drucklos, und der Verbraucher des Anbaugeräts kann unabhängig von der Stellung des Wegeventils 21 nicht angetrieben werden. Das zum Lastdruckanschluss 14 nächst benachbarte Wechselventil 22 sorgt dafür, dass auch die Lastdruckanschlüsse 14, 16 selbst dann drucklos sind, wenn einer der fahrzeugseitigen Verbraucher in Betrieb ist und sein Wegeventil 8a oder 8b hohen Druck auf die Lastdruck-Meldeleitung 6 ausgibt. In dieser Stellung des Abschaltventils 23 ist es daher selbst bei laufendem Motor und arbeitenden Verbrauchern des Fahrzeugs problemlos möglich, die Anschlüsse 10, 11, 14 und 16 bzw. 13 und 15 voneinander zu trennen und das Anbaugerät gegen ein zweites auszutauschen.

In der zweiten, offenen Stellung des Abschaltventils 23 sind die Hochdruckleitungen 12, 18 des Fahrzeugs und des Anbaugeräts miteinander verbunden, und der Verbraucher des Anbaugeräts kann betrieben werden.

Um die Anschlüsse 10 und 11, 13 und 15 bzw. 14 und 16 bequem miteinander verbinden zu können, sind die Leitungen 18, 19, 20 auf Seiten des Anbaugeräts wenigstens teilweise als flexible Schläuche ausgeführt. An diesen Schläuchen können unsachgemäße Handhabung oder Zwischenfälle beim Arbeitseinsatz zu Lecks führen. In einem solchen Fall kann durch Versetzen des Abschaltventils 23 in die in der Figur gezeigte sperrende Stellung die Freisetzung von Hydraulikfluid am Leck unterbunden werden. Es ist daher nicht nötig, das Anbaugerät an Ort und Stelle abzumontieren, um die weitere Freisetzung von Hydraulikfluid zu verhindern; vielmehr kann das Fahrzeug mit montiertem Anbaugerät zu einer Werkstatt gefahren werden, um den Defekt zu beheben.

Einer einfachen Ausgestaltung zufolge kann das Abschaltventil 23 durch einen Benutzer von Hand abschaltbar sein. Vorzugweise ist es elektrisch schaltbar, und ein Bedienelement 24 zum Fernsteuern des Abschaltventils 23 ist in einer Fahrerkabine des Fahrzeugs montiert. Insbesondere kann das Bedienelement 24 mit einer Steuereinheit 26 des Abschaltventils 23 über einen Datenbus 25, etwa vom Typ ISO-Bus, kommunizieren.

Die Anschlüsse 10, 13, 14 können, wie in der Fig. 1 exemplarisch für den Hochdruckanschluss 10 gezeigt, mit Sensoren 17 bestückt sein, um die Anwesenheit des jeweils komplementären anbaugeräteseitigen Anschlusses 11, 15 bzw. 16 zu erfassen. Die Sensoren 17 können mit der Steuereinheit 26 verbunden sein, so dass diese ungeachtet eventuell anderslautender über den Bus 25 empfangener Befehle das Abschaltventil 23 in der Sperrstellung hält, solange nicht alle Sensoren 17 die Anwesenheit des jeweils komplementären Anschlusses melden.

Einer bevorzugten Weiterbildung zufolge reicht der Datenbus über einen lösbaren Steueranschluss 28 bis ins Anbaugerät, und auf Seiten des Anbaugeräts ist eine Steuereinheit 27 vorgesehen, die das Wegeventil 21 oder ggf. die mehreren Wegeventile des Anbaugeräts sowie, durch Senden von Befehlen über den Bus 25 an die Steuereinheit 26, das Abschaltventil 23 steuert. Die Steuereinheit 27 ist jeweils spezifisch für den Typ des Anbaugeräts und dessen Funktion. Wenn das Anbaugerät z.B. eine Ballenpresse ist, dann kommen als von der Steuereinheit 27 gesteuerte Verbraucher insbesondere ein Stellzylinder für die Höhenverstellung einer Pick-up, Presswalzen und ein Stellzylinder zum Öffnen des Gehäuses der Ballenpresse in Betracht. Solange die Pick-up abgesenkt und in der Lage ist, Pressgut aufzunehmen, sind entweder die Presswalzen oder der Stellzylinder zum Öffnen des Gehäuses in Betrieb, und die Steuereinheit 27 hält das Abschaltventil 23 in der offenen Stellung. Ist hingegen die Pick-up angehoben und nicht in der Lage, Pressgut aufzunehmen, stehen auch die anderen Verbraucher still, und die Steuereinheit 27 erlaubt einen Übergang des Abschaltventils 23 in die sperrende Stellung. Auf diese Weise sind die Leitungen 18, 19, 20 der Ballenpresse automatisch drucklos, solange diese nicht arbeitet. Wenn die Ballenpresse zur Vorbereitung des Betriebs einen Befehl zum Absenken der Pick-up empfängt, versetzt die Steuereinheit 27 zunächst das Abschaltventil 23 in die offene Stellung, um den zum Verstellen der Pick-up nötigen Druck auf der Leitung 18 zur Verfügung zu haben.

Die Steuereinheit 27 kann das Abschaltventil 23 über den Datenbus 25 mit einer kleinen Zahl von Befehlen steuern, die das Ventil 23 veranlassen, seine Stellung zu wechseln oder eine im Befehl spezifizierte Stellung einzunehmen und in dieser zu bleiben, bis ein weiterer Befehl eintrifft. Wenn allerdings durch eine Störung oder einen Unfall der Bus zwischen der Steuereinheit 27 des Anbaugeräts und der Steuereinheit 26 des Abschaltventils 23 unterbrochen wird, kann es vorkommen, dass das Abschaltventil 23 in der offenen Stellung bleibt, und die Verbraucher des Anbaugeräts weiter angetrieben werden, ohne dass die Steuereinheit 27 noch in der Lage wäre, deren Betrieb korrekt zu steuern. Dies kann vermieden werden, indem die von der Steuereinheit 27 an das Abschaltventil 23 gerichteten Befehle jeweils nur für eine beschränkte Zeit einen Übergang in die offene Stellung bewirken. Solange die Steuereinheit 27 korrekt arbeitet und diese Befehle mit ausreichend hoher Frequenz eintreffen, bleibt das Abschaltventil 23 in der offenen Stellung, und eine kontinuierliche Versorgung der Verbraucher des Anbaugeräts mit hydraulischer Energie ist gewährleistet. Wenn jedoch eine Störung im Anbaugerät dazu führt, dass diese Befehle nicht mehr eintreffen, geht das Abschaltventil 23 in die sperrende Stellung über, und die Verbraucher bleiben stehen. Folgeschäden infolge fehlerhafter Steuerung sind so ausgeschlossen.

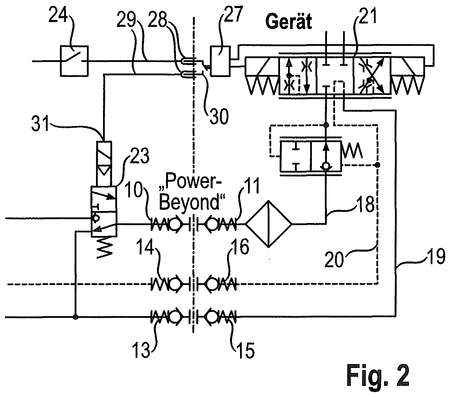

Einer in Fig. 2 gezeigten vereinfachten Abwandlung zufolge ist das Bedienelement 24 ein Schalter, von dem aus eine Steuerleitung 29 über ein Relais 30 zu einem Steuereingang 31 des Abschaltventils 23 verläuft. Das von der Steuereinheit 27 gesteuerte Relais 30 ist hier auf Seiten des Anbaugeräts gezeigt, und die Steuerleitung 29 erstreckt sich über den Steueranschluss 28; alternativ könnte das Relais 30 auch auf Seiten des Traktors angeordnet sein und ein Teil der Steuerleitung zwischen Steuereinheit 27 und Relais 30 über den Steueranschluss 28 verlaufen. Wenn Schalter 24 und Relais 30 geschlossen sind, liegt ein aktives Potential am Steuereingang 31 an, und das Abschaltventil 23 ist offen. Wenn von Schalter 24 und Relais 30 nur eines geöffnet oder die Steuerleitung 29 am Steueranschluss 28 unterbrochen wird, nimmt der Steuereingang 31 ein Ruhepotential an, und das Abschaltventil 23 geht in die sperrende Stellung.

### Bezugszeichen

- 1: Verstellpumpe
- 2: Tank
- 3: Hochdruckleitung
- 4: Stellzylinder
- 5: Regeldruckwaage
- 6: Lastdruck-Meldeleitung
- 7: Sicherungsventil
- 8: Wegeventil
- 9: Niederdruckleitung
- 10: Hochdruckanschluss
- 11: Hochdruckanschluss
- 12: Hochdruckleitung
- 13: Niederdruckanschluss
- 14: Lastdruck-Meldeanschluss
- 15: Niederdruckanschluss
- 16: Lastdruck-Meldeanschluss
- 17: Sensor
- 18: Hochdruckleitung
- 19: Niederdruckleitung
- 20: Lastdruck-Meldeleitung
- 21: Wegeventil
- 22: Wechselventil
- 23: Abschaltventil
- 24: Bedienelement
- 25: Datenbus
- 26: Steuereinheit
- 27: Steuereinheit
- 28: Steueranschluss

## Patentansprüche

1. Fahrzeug mit einer mit einem Motor des Fahrzeugs kontinuierlich mitlaufenden lastgeregelten Hydraulikpumpe (1) zum Aufnehmen von Hydraulikfluid aus einem Niederdruckleitungsbereich (9, 2) und Einspeisen des Hydraulikfluids in einen Hochdruckleitungsbereich (3), wobei der Hochdruckleitungsbereich (3) einen Hochdruckanschluss (10) und der Niederdruckleitungsbereich (9) einen Niederdruckanschluss (13) zur Versorgung eines an das Fahrzeug ankoppelbaren Anbaugeräts aufweist, **dadurch gekennzeichnet, dass** dem Hochdruckanschluss (10) im Hochdruckleitungsbereich (3) ein Abschaltventil (23) zum Sperren des Flusses von Hydraulikfluid zum Hochdruckanschluss (10) vorgeschaltet ist, wobei ein Steuereingang (31) des Abschaltventils (23) mit einem Steueranschluss (28) verbunden ist, an den das Anbaugerät anschließbar ist, und das Abschaltventil (23) in der sperrenden Stellung gehalten ist, wenn das Anbaugerät nicht an den Steueranschluss (28) angeschlossen ist.

2. Fahrzeug nach Anspruch 1, **dadurch gekennzeichnet, dass** das Abschaltventil (23) ein Wegeventil ist, das in seiner den Fluss von Hydraulikfluid zum Hochdruckanschluss (10) sperrenden Stellung den Hochdruckanschluss (10) mit dem Niederdruckleitungsbereich (9, 2) verbindet.

3. Fahrzeug nach Anspruch 1 oder 2, **dadurch gekennzeichnet, dass** das Abschaltventil (23) als Sitzventil ausgeführt ist.

4. Fahrzeug nach einem der vorhergehenden Ansprüche, **dadurch gekennzeichnet, dass** eine Steuereinheit (26) eingerichtet ist, das Angeschlossensein des Anbaugeräts an Hoch- und Niederdruckanschluss (10, 13) zu erfassen und das Abschaltventil (23) in der sperrenden Stellung zu halten, wenn an wenigstens einem der Anschlüsse (10, 13) das Angeschlossensein des Anbaugeräts nicht erfasst wird.

5. Fahrzeug nach Anspruch 1, **dadurch gekennzeichnet, dass** der Steuereingang (31) und der Steueranschluss (28) über eine elektrische Signalleitung (29), insbesondere über einen Datenbus (25), verbunden sind.

6. Fahrzeug nach Anspruch 5, **dadurch gekennzeichnet, dass** das Abschaltventil (23) durch ein auf der Signalleitung (25) empfangenes Signal für begrenzte Zeit in seine offene Stellung versetzbar ist.

## Claims

1. A vehicle comprising a load-controlled hydraulic pump (1) which runs continuously with an engine of the vehicle to receive hydraulic fluid from a low-pressure line region (9, 2) and to feed the hydraulic fluid into a high-pressure line region (3), wherein the high-pressure line region (3) has a high-pressure connection (10) and the low-pressure line region (9) has a low-pressure connection (13) for supplying an attachment which can be coupled to the vehicle; **characterised in that** connected upstream of the high-pressure connection (10) in the high-pressure line region (3) is a shutoff valve (23) for blocking the flow of hydraulic fluid to the high-pressure connection (10), wherein a control input (31) of the shutoff valve (23) is connected to a control connection (28) to which the attachment can be connected, and the shutoff valve (23) is held in the blocking position when the attachment is not connected to the control connection (28).

2. A vehicle according to claim 1 **characterised in that** the shutoff valve (23) is a directional control valve which in the position thereof blocking the flow of hydraulic fluid to the high-pressure connection (10) connects the high-pressure connection (10) to the low-pressure line region (9, 2).

3. A vehicle according to claim 1 or claim 2 **characterised in that** the shutoff valve (23) is a poppet valve.

4. A vehicle according to one of the preceding claims **characterised in that** a control unit (26) is adapted to detect that the attachment is connected to the high-pressure and low-pressure connections (10, 13) and to hold the shutoff valve (23) in the blocking position when the attachment is detected as being connected to at least one of connections (10, 13).

5. A vehicle according to claim 1 **characterised in that** the control input (31) and the control connection (28) are connected by way of an electric signal line (29), in particular by way of a data bus (25).

6. A vehicle according to claim 5 **characterised in that** the shutoff valve (23) is switchable into its open position for a limited time by a signal received on the signal line (29).

## Revendications

1. Véhicule comprenant une pompe hydraulique (1) régulée selon la charge, tournant en continu avec le moteur du véhicule, pour recevoir du fluide hydraulique depuis une zone de conduite de basse pression (9, 2) et refouler le fluide hydraulique vers une zone de conduite de haute pression (3), la zone de conduite de haute pression (3) comportant un raccord de haute pression (10), et la zone de conduite de basse pression (9), un raccord de basse pression (13) pour alimenter un outil rapporté couplable au véhicule, **caractérisé en ce qu'**en amont du raccord de haute pression (10) dans la zone de conduite de haute pression (3) est prévue une valve de coupure (23) pour arrêter le flux de fluide hydraulique vers le raccord de haute pression (10), une entrée de commande (31) de la valve de coupure (23) étant reliée à un raccord de commande (28) auquel l'outil rapporté peut être relié, et la valve de coupure (23) étant maintenue dans la position d'arrêt si l'outil rapporté n'est pas relié au raccord de commande (28).

2. Véhicule selon la revendication 1, **caractérisé en ce que** la valve de coupure (23) est une valve directionnelle qui, dans la position d'arrêt du flux de fluide hydraulique vers le raccord de haute pression (10), relie le raccord de haute pression (10) à la zone de conduite de basse pression (9, 2).

3. Véhicule selon la revendication 1 ou 2, **caractérisé en ce que** la valve de coupure (23) est conformée en valve à siège.

4. Véhicule selon une des revendications précédentes, **caractérisé en ce qu'**une unité de commande (26) est agencée pour détecter l'état de liaison de l'outil rapporté au raccord de haute et basse pression (10, 13) et pour maintenir la valve de coupure (23) dans la position d'arrêt si l'état de liaison de l'outil rapporté n'est pas détecté au niveau d'au moins un des raccords (10, 13) .

5. Véhicule selon la revendication 1, **caractérisé en ce que** l'entrée de commande (31) et le raccord de commande (28) sont reliés par l'intermédiaire d'une ligne de signal électrique (29), en particulier par l'intermédiaire d'un bus de données (25).

6. Véhicule selon la revendication 5, **caractérisé en ce que** la valve de coupure (23) est transférable pendant un temps limité dans sa position ouverte par l'intermédiaire d'un signal reçu sur la ligne de signal (25).
